# EUROPÄISCHE PATENTANMELDUNG

(11) **EP 3 569 957 A1**
(43) Veröffentlichungstag der Anmeldung: **20.11.2019**
(21) Anmeldenummer: 18172087.1
(22) Anmeldetag: 14.05.2018
(51) Int. Cl.: F26B 17/02, F26B 1/00, B30B 9/20, C02F 11/12

(54) **VORRICHTUNG UND VERFAHREN ZUR AUFBEREITUNG VON KLÄRSCHLAMM**

(71) Anmelder: Wenner, Christian, 84568 Pleiskirchen (DE)
(72) Erfinder: Wenner, Christian, 84568 Pleiskirchen (DE)
(74) Vertreter: K & H Bonapat Patentanwälte Koch · von Behren & Partner mbB

(57) **Zusammenfassung**

Die Erfindung betrifft eine Vorrichtung und ein Verfahren zur Behandlung von Klärschlamm, der über eine Einlasseinheit in eine Vereinzelungseinheit mit einem Walzenpaar eingebracht wird, mit dem Strangpresslinge aus dem zugeführten Klärschlamm gebildet werden. Diese werden sodann auf ein Transportband einer Bandtrocknungsanlage aufgebracht, um sie nachfolgend in einer zugehörigen tunnelartigen Trocknungszone zu trocknen. Erfindungsgemäß sind die Walzen der Vereinzelungseinheit mit ihren Längsachsen parallel zum Förderweg des Transportbandes der Bandtrocknungsanlage angeordnet wobei die Walzen derart beweglich gelagert sind, dass sie über die Breite des Transportbandes hin-und-her verfahren werden können.

## Beschreibung

Die Erfindung betrifft eine Vorrichtung und ein Verfahren zur Aufbereitung von Klärschlamm (z.B. Hühnerkot, Geflügelmist; Gärreste), genauer gesagt zu dessen Dosierung, Vereinzelung und Trocknung. Es handelt sich insbesondere um mechanisch vorentwässerten Klärschlamm, wie er aus Kläranlagen kommen kann, dessen Aufbereitung schließlich zu einem handhabbaren Trockengut führen soll.

Diese Aufbereitung ist für eine Nährstoff-Rückgewinnung, eine Lagerung des Klärschlamms und auch für dessen weitere Verwertung durch beispielsweise thermische Nutzung oder für eine Produktion von landwirtschaftlichem Dünger oder Pellets unabdingbar. Da eine Trocknung zeit- und/oder energieaufwändig ist, ist es von Vorteil, wenn das Ausgangssubstrat mechanisch vorentwässert wird und nachfolgend eine Vereinzelung erfolgt, um kleinere und damit besser trocknende Einheiten zu schaffen. Die mechanische Vorentwässerung wird z.B. in einer Presse oder mittels Führung durch Filter- oder Siebbänder realisiert, wobei der mechanisch vorentwässerte Klärschlamm nachfolgend einer Anlage zugeführt wird, die diesen verteilt bzw. dosiert. Solche Anlagen können aus einem Extruder oder zumindest aus einer Förderschnecke und einer Matrize (z.B. einem Sieb oder einem Filter) bestehen, durch die der Klärschlamm unter hohem Druck gepresst wird. Ein Nachteil liegt darin, dass zähe oder harte Partikel (z.B. Steine, Haare, Kunststoffe, Folien und andere Fremdstoffe), welche eine gewisse Größe überschritten haben, zu Verstopfungen führen. Auch wird der mechanisch vorentwässerte Klärschlämme oft zwischengelagert, dann weiter transportiert und verladen, wobei es dadurch nicht auszuschließen ist, dass u.a. Steine, Hölzer oder andere Fremdstoffe mit aufgenommen werden, die bei einer späteren Vereinzelung berücksichtigt werden müssen.

Dies führt allgemein zu einem hohen Verschleiß und Wartungsaufwand solcher Anlagen, da obige Fremdstoffe manuell aus der Anlage entfernt werden müssen. Zudem ist der Energieverbrauch, um den Schlamm durch die Matrizen zu pressen vergleichsweise hoch, da in der Regel Drücke von bis zu 50 bar nötig sind, was sich sowohl im Stromverbrauch der Extruder als auch im Verschleiß der Anlage widerspiegelt. So entstehen hohe Betriebskosten und kurze Wartungsintervalle. Hinzu kommt, dass Extrudersysteme systembedingt (durch die Erzeugung hoher Drücke) größere Partikel entstehen lassen, was zu einer ineffektiveren Trocknung führt. Um Partikel zu verkleinern, müssen die Matrizenöffnungen verkleinert werden, was den oben beschriebenen Nachteil noch verstärkt.

Als Vereinzelungsapparatur sind alternativ Einrichtungen zum Formen würstchenförmiger Strangpresslingen bekannt, bei denen das vorentwässerte Schlammmaterial durch rotierende Walzen gepresst wird. Es entstehen dabei Formlinge ähnlich wie bei einer Nudelmaschine. Gegenüber Lochmatrizen, welche regelmäßig zu Verstopfen drohen, hat der Einsatz von Walzen mit Strukturierung, d.h. mit beispielsweise darin ausgebildeten Querrillen zum Vorteil, dass Störstoffe beim Querlegen über diese Querrillen durch Scherung zerkleinert und im Übrigen mitgerissen und wie anderen Fremdkörper im Strangpressling eingeschlossen werden.

Zur Trocknung selbst kommt dann ein Trocknungssystem zum Einsatz, bei dem der so vorliegende würstchenförmige Schlamm in eine nach dem Konvektionsprinzip arbeitende Bandtrockner-Apparatur eingebracht wird. Nach der Verteilung auf ein Transportband durchläuft das Haufwerk eine tunnelartige Trocknungszone, an deren Ende es als Trockengut auf eine abführende weitere Fördereinrichtung abgeworfen wird. Beispielhaft seien hierzu die DE 10 2013 221 160 A1 und die DE 10 2016 107 061.0 A1 des Anmelders genannt. Bei dieser Art von Anlage zeigt sich jedoch der Nachteil, dass die Fläche des Förderbandes nicht optimal genutzt wird, weil der Auftrag des Schlammes auf das Band nicht kontinuierlich vollzogen werden kann. Das liegt bereits an der Inhomogenität des Schlammes, sodass es bei dessen Vereinzelung durch die Walzen zu einem diskontinuierlichen Gemenge über die Breite des Förderbandes kommt. Immer dann, wenn obige Störstoffe zu einem Förderengpass an einer Stelle der Vereinzelungsapparatur führen, entsteht eine Leerstelle oder Leerspur oder zumindest eine Spur mit weniger Produkt auf dem durchlüftbaren Förderband, d.h. Trocknerband in der Trocknungsanlage.

Zum Anderen ergibt sich das Problem der Leerspur bereits aus dem punktuellen Eintrag in die Vereinzelungsapparatur, d.h. dem Auftrag des Schlammes auf die Walze(n). Besonders anfällig sind hier Vereinzelungsapparaturen mit sehr breiten Ein- und Auslässen, wie sie beispielsweise lange Walzen zeigen, durch die der Schlamm gepresst wird. Natürlich könnte man die Walzenapparatur generell schmäler bauen, und eine Verteilung der Strangpresslinge mittels Schwenkband oder Schwenkschnecke auf das Band des Trockners aufbringen. Hierbei wurde jedoch vom Anmelder der vorliegenden Erfindung die Erfahrung gemacht, dass diese Zuführung wieder zu einem Verkleben und Vermatschen des Förderproduktes auf dem Weg unmittelbar vor Erreichen des Förderbandes führt. Das resultiert letztendlich wieder in einer ungleichmäßigen Verteilung auf dem Band, wobei Schlamm-Klumpen eine schlechtere Durchlüftung des Produktes auf dem Band nach sich ziehen. Das Ergebnis zeigt wieder eine Ineffizienz der Trocknung, eine Inhomogenität des Förderproduktes und auch feuchte Brocken im Endprodukt.

Obige Problematik der ungleichmäßigen Verteilung des Klärschlamms auf dem Förderband bedeutet insgesamt, dass die Kapazität der Trocknungsanlage nicht ausreichend genutzt wird, weil Luft ungenutzt aus der Trocknungsanlage entweicht und die Trocknung damit ineffizient wird.

Die Aufgabe der vorliegenden Erfindung ist es, die Nachteile im Stand der Technik zu überwinden und eine Vorrichtung und ein Verfahren zur Verfügung zu stellen, mit denen eine einfache und kostengünstige Aufbereitung von Klärschlamm erfolgt.

Im Detail ist es auch Aufgabe der Erfindung, eine Anlage bereitzustellen, die möglichst störungsfrei und mit möglichst geringem Energie- und Wartungsaufwand arbeitet, um die Betriebskosten sowie das Betriebspersonal auf ein minimales Maß reduzieren zu können.

Diese Aufgabe wird durch eine Vorrichtung und ein Verfahren gemäß den Ansprüchen 1 und 12 gelöst. Vorteilhafte Ausführungsformen gehen aus den Unteransprüchen hervor.

Die erfindungsgemäße Vorrichtung umfasst eine Einlasseinheit, mittels der ein von extern kommender Klärschlamm zu dessen Aufbereitung aufgenommen wird. Von der Einlasseinheit wird der Klärschlamm sodann in eine Vereinzelungseinheit geführt, die eine Vereinzelung mit mindestens einem Walzenpaar aus zwei parallel angeordneten Walzen vollzieht. Die beiden Walzen haben vorteilhafterweise einen gegenläufigen Drehsinn, um bei einer Drehung der Walzen sog. Strangpresslinge aus dem Klärschlamm zu bilden.

In vorteilhafter Weise ist auf der Oberfläche einer Walze eine Strukturierung vorgesehen, um den Klärschlamm bei einer Drehung der Walzen aufzufasern. Beispielsweise kann eine Walze gegenüber ihrem Außendurchmesser radial rückversetzte Querrillen haben, so dass beim Drehen der Walzen der Klärschlamm in besagte Querrillen eingezogen und zu länglichen Strangpresslingen geformt wird. Noch vorteilhafter ist es, wenn beide Walzen eines Walzenpaares jeweils besagte Querrillen aufweisen, die über die Längsachse zueinander so versetzt sind, dass diese Strukturen komplementär ineinander greifen. Störstoffe werden so beim Querlegen über zwei oder mehrere Querrillen mittels Scherung zerkleinert und im Übrigen mitgerissen und wie andere Fremdkörper im Strangpressling eingeschlossen.

Diese Strangpresslinge werden dann von einer von der erfindungsgemäßen Vorrichtung umfassten Bandtrocknungsanlage aufgenommen. Im Detail werden die Strangpresslinge auf ein durchlüftbares Transportband verteilt, um nachfolgend eine tunnelartige Trocknungszone zu durchfahren, an deren Ende das getrocknete Haufwerk auf z.B. eine abführende Fördereinrichtung abgeworfen wird. Die Trocknungszone selbst umfasst mindestens eine Trocknungskammer, in der das Haufwerk mit Warmluft durchströmt werden kann, die ggf. mittels eines Lüftungssystems im Kreislauf geführt werden kann. Die im Bandtrockner angefeuchtete Luft wird nachfolgend mit einem Abluftgebläse aus der Trocknungszone abgezogen und durch eine Reihe von Wärmetauschern geführt.

Die Erfindung ist nun dadurch gekennzeichnet, dass die Walzen der Vereinzelungseinheit mit ihren Längsachsen parallel zur Förderrichtung des Transportbandes der Bandtrocknungsanlage angeordnet sind und die Walzen derart beweglich gelagert sind, dass sie über die Breite des Transportbandes verfahrbar sind.

Dieser Verfahrweg der Vereinzelungseinheit ist vorteilhaft senkrecht zum Förderweg des Transportbandes; er kann jedoch auch winklig zu diesem sein.

Der sich hieraus ergebene Vorteil besteht darin, dass das auf das Transportband gelangende Haufwerk aus Strangpresslingen in optimiert gleichmäßiger Verteilung aufgebracht wird. Die gleichmäßige Beschickung von Strangpresslingen auf das Transportband erhöht dadurch die Kapazität der Trocknungsanlage und verbessert die Gleichmäßigkeit der Endfeuchte des Endproduktes.

Die verbesserte Verteilung geht darauf zurück, dass sich etwaig auf den Walzen bildende Leerstellen - die sich bei einer Verstopfung durch beispielsweise Störstoffe ergeben - mit an anderer Stelle der Walzen hindurchgepresstem Klärschlamm auf dem Föderband wieder auffüllen lassen. Jede Verstopfung in der Walzeneinheit hinterlässt nämlich zunächst eine Leerstelle des aus den Walzen abfallenden Schlammes, der ähnlich eines Schlamm-Vorhanges aus den Walzen gepresst wird. Durch die erfindungsgemäße Positions-Anordnung von den Walzen relativ zur Ausrichtung des Förderweges des Transportbandes werden diese Leerstellen oder Leerspuren wieder mit - von der Förderrichtung des Bandes aus gesehen - hinteren Schlammanteilen aufgefüllt, weil die Ebene des aus den Walzen abfallenden Vorhangs nicht senkrecht zur Förderrichtung des Transportbandes steht sondern parallel dazu. Bei senkrechter Anordnung der Walzenachsen zur Förderrichtung, wie sie im Stand der Technik bekannt ist, werden diese Störstellen demgegenüber nicht aufgefüllt; Sie sind damit auf dem Förderband sichtbar.

Um nun auch die gesamte Breite des Transportbandes zu nutzen, d.h. die gesamte Fläche des Transportbandes mit Strangpresslingen auszulegen, ist die Vereinzelungseinheit mit ihren Walzen beweglich gelagert, derart, dass die Walzen über die Breite des Transportbandes - also quer zu dessen Förderrichtung - hin und her verfahrbar sind. Das Transportband hat im allgemeinen eine Länge entlang dessen Förderweges, während die Breite des Bandes dann quer zur Förderrichtung ist. In vorteilhafter Weise erfolgt das Verfahren der Vereinzelungseinheit, sprich der Walzen, mittels Motorantrieb, und zwar mit einer Motor-Steuerung, mit der die Geschwindigkeit des Verfahrens einstellbar ist. Diese Geschwindigkeit kann dann auf die Geschwindigkeit des Förderbandes abgestimmt werden, bzw. *vice versa.* Diese Abstimmung kann vorteilhafterweise automatisiert durch eine Computersteuerung erfolgen.

Zusammen mit der obigen parallelen Anordnung von Walzen zur Förderrichtung des Bandes ergibt sich aufgrund der erfindungsgemäßen Verfahrbarkeit der Walzenkonfiguration insgesamt dann eine gleichmäßige Verteilung von Klärschlamm auf dem Förderband.

Testergebnisse des Anmelders haben gezeigt, dass Walzenlängen von ca. 20 cm bis 50 cm in vorteilhafter Weise geeignet sind.

Als vorteilhafte Ausführungsform wird eine Verfahreinheit vorgeschlagen, die einen Schlitten aufweist, mit dem die Vereinzelungseinheit - sprich das Walzenpaar - auf Schlittenschienen verfahren wird. Von Vorteil ist es, wenn der Schlitten über die Breite der Bandtrocknungsanlage hinaus verfahren werden kann - also die Schlittenschienen über die Breite der Trocknungsapparatur abragen, denn dann kann die Vereinzelungseinheit zu Wartungs- oder Reinigungszwecken aus dem Bereich der Trocknungsanlage heraus gefahren werden, womit ein Zugriff auf die Vereinzelungseinheit erleichtert ist.

Die translatorische Bewegung der Vereinzelungseinheit über die Breite des Transportbandes kann eine lineare Gerade sein; die Bewegung kann aber auch bogenförmig erfolgen.

Als vorteilhaft hat sich erwiesen, wenn das der Vereinzelungseinheit zuzuführende Material zudosiert, d.h. mit leichtem Schub kontinuierlich auf die Walzen zugeführt wird. Dies erfolgt mit Hilfe einer von der Einlasseinheit umfassten Dosierschnecke, an deren Ende das Ausgangsprodukt mit gleichmäßigem Druck auf die Walzen der Vereinzelungseinheit aufgebracht wird. Durch den leichten Druck der Dosierschnecke werden bereits Verstopfungen vermieden. Der leichte Zuführdruck führt nämlich zu einer Verdichtungszone mit gleichmäßigem Druck vor den Walzen, wodurch die Walzen über ihre gesamte Länge gleichmäßig mit Klärschlamm beaufschlagt werden. In vorteilhafter Weise schafft ein kurzes, ca. 20 bis 50 cm langes Rohr-Übergangsstück (z.B. Rohrbogen) besagte Verdichtungszone.

Ist die Dosierschnecke gemäß einer vorteilhaften Ausführungsform eine ca. 1 m lange seelenlose Rohrschnecke, dosiert sie das Material in Druck und Menge. Die Seelenlosigkeit der Schnecke führt dazu, dass solcher Klärschlamm, der nicht von den Walzen aufgenommen werden kann - also Überschuss-Schlamm - wieder in den Dosierschnecken-Tunnel zurückgeführt wird. Dadurch wird einmal mehr eine gleichförmige Zufuhr auf das Walzen-Paar gewährleistet und zwar über dessen gesamte Länge.

Gemäß einer vorteilhaften Ausführungsform ist die Dosierschnecke mit der Vereinzelungseinheit als eine Einheit verfahrbar. Die Einlasseinheit weist dann einen statischen, d.h. unbeweglichen Einlauftrog auf, der als Anschluss für eine externe Zuführeinheit dient. Der ankommende Klärschlamm wird demnach vom Einlauftrog aufgenommen und in die unter ihm verfahrende Dosierschnecke eingebracht.

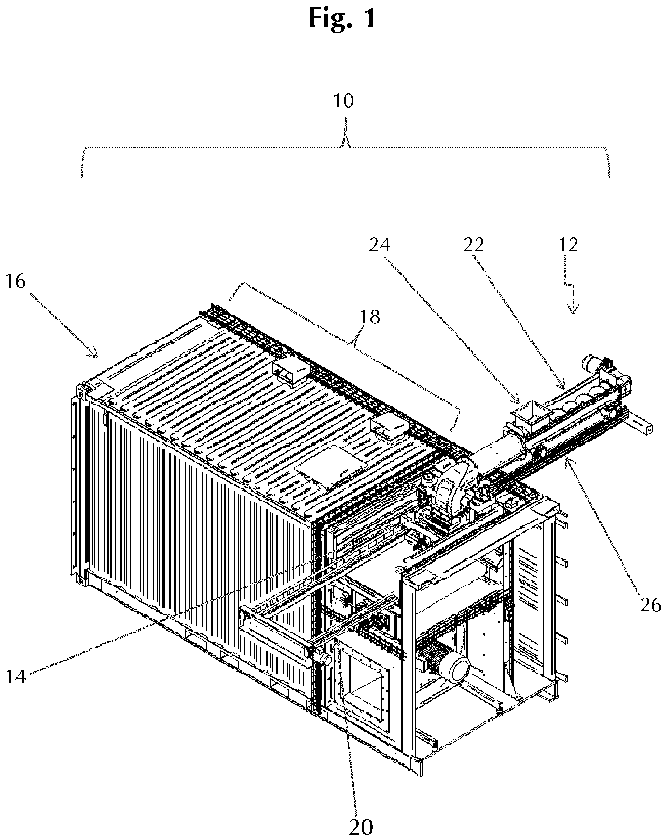

Erfolgt diese Einbringung über die Längsachse der Dosierschnecke, hat es sich als vorteilhaft erwiesen, wenn die Dosierschnecke eine Drehzahlregelung aufweist, die es erlaubt, unterschiedliche Fördergeschwindigkeiten der Dosierschnecke einzustellen. Damit werden Verstopfungen in der Dosierschnecke vermieden. Dies gilt insofern dann, wenn der Verfahrweg der Dosierschnecke relativ zum Einlauftrog beim Hin-und-Her-Verfahren einmal identisch ist mit der Förderrichtung der Dosierschnecke (Hinbewegung)) und ein anderes mal entgegengesetzt (Herbewegung) - siehe hierzu im Detail die Ausführungsform aus Figuren 1 bis 4: Ist nämlich die Verfahrrichtung der Dosierschnecke relativ zum Einlauftrog entgegengesetzt zur Förderrichtung der Dosierschnecke (beispielsweise Herbewegung), ist das Risiko einer Verstopfung ohnehin minimiert, so dass die Dosierschnecke dann mit einer geringeren Drehzahl betrieben werden kann gegenüber einer Drehzahl bei Gleichlauf: Verfährt die Dosierschnecke unterhalb des Einlauftroges im Gleichlauf zur Förderbewegung der Schnecke können sich Verstopfungen ergeben, weil zum Einen der Einlauf auf die Schnecke erfolgt und zum Anderen die Schnecke bereits enthaltenden Schlamm genau auf die Einlaufstelle fördert. In diesem Fall ist dann die Drehzahl der Dosierschnecke zu erhöhen, um den Schlamm-Eintrag in Richtung zu den Walzen schneller weg zu transportieren.

Insgesamt kann festgehalten werden, dass die Kombination aus separater Einlaufzone mittels Einlauftrog und der nachgeschalteten Verdichtungszone durch die Dosierschnecke bereits der Bildung von Verstopfungen in der Vereinzelungseinheit vorteilhaft entgegenwirkt, weil die Walzen über deren gesamte Breite gleichmäßig beaufschlagt werden.

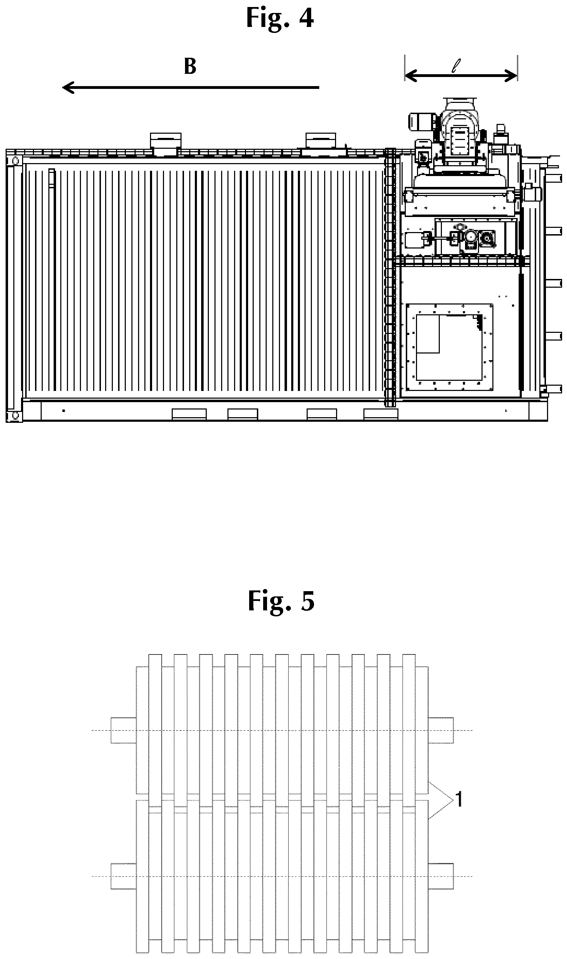

Selbstverständlich werden die Walzen mit einer Antriebseinheit aktiv bewegt. Dabei kann vorgesehen sein, dass die beiden Walzen eines Walzenpaares über ein Getriebe synchronisiert sind. Auch wenn es bevorzugt ist, dass die Geschwindigkeit der beiden Walzen und insbesondere der beiden Oberflächen zueinander gleich ist, kann es für einige Anwendungen auch von Vorteil sein, wenn die jeweiligen Dreh-Geschwindigkeiten unterschiedlich sind. So könnte die Geschwindigkeit der einen Walzenoberfläche zwischen 80% und 99% der komplementären Walzenoberfläche gewählt werden, um Scherkräfte gezielt auszunutzen. Besondern bevorzugt sind Walzen mit einer alternierenden Riffelung längs über ihre Länge (siehe hierzu auch FIG. 5). Diese Walzen können zwar als Drehteil hergestellt sein, eine sehr günstige Ausführungsform liegt jedoch darin, eine jeweilige Walze aus Einzelscheiben unterschiedlicher Durchmesser herzustellen - insbesondere mit jeweils zwischen mindestens zwei unterschiedlichen Werten alternierendem Durchmesser. Bevorzugt sind generell Walzenoberflächen mit einer sog. Nut- und Feder-Konstellation. Die als abragende Rippen vorgesehenen Federn greifen in Nuten auf der gegenüberliegenden Walzenoberfläche ein, wobei die Federn/Nuten radial über den Umfang der Walze verlaufen. Dieser Verlauf kann auch in einem Winkel kleiner als 45° oder gar kleiner als 30° gewählt werden. Die Längsachsen der Walzen eines Walzenpaares sind vorteilhaft in einer gemeinsamen horizontalen Ebene angeordnet. Es sind jedoch auch Ausführungen anderer Orientierungen möglich, ggf. von Vorteil. So könnte beispielsweise zu Zwecken der Raumeinsparung die beide Achsen der Walzen enthaltende Ebene einen Winkel zur Horizontalen aufweisen. Bevorzugte Materialien für die Walzen sind allgemein Metalle, die insbesondere korrosionsbeständig oder gehärtet sind. Auch sind Kunststoffe oder Keramiken einsetzbar.

Die Tiefe bzw. die Höhe der Strukturen der Walzenoberflächen ist abhängig vom zu behandelnden Klärschlamm. Sie ist vorzugsweise größer als 1 mm, insbesondere größer als 1 cm, aber bevorzugt kleiner als 1/3 des Radius der Walze, insbesondere kleiner als 1/5 des Radius. Durch die Strukturierung der Walzenoberfläche wird der Klärschlamm selbstständig und mit sehr wenig Druck eingezogen.

Die Struktur der Oberflächen umfasst insbesondere Strukturen der Gruppe Nuten längs des Umfangs oder zumindest zur Längsachse geneigt (zur strangförmigen Dosierung des Klärschlamms), Nuten parallel zur Längsachse (strangförmige Stückelung), Eindrücke auf der einen Oberfläche, Protrusionen auf der gegenüberliegenden Oberfläche (Pelletformung) und mäanderförmige Strukturen. Die Ränder der Strukturen können glatt oder geriffelt sein, wobei letzteres die Oberfläche des dosierten Klärschlamms vergrößert und damit eine Trocknung verbessert.

Die Durchmesser sowie die Profile der Strukturen sind im Grunde frei wählbar, um geeignete Größen und Formen von Strangpresslingen zu erzeugen. Die Breite der Strukturen liegt bevorzugt im Bereich zwischen 0,1 cm und 10 cm, insbesondere zwischen 0,5 cm und 5 cm. Der Querschnitt der Strukturen ist bevorzugt rechteckig, halbrund oder dreieckig.

Gemäß einer bevorzugten Ausführungsform umfasst die Oberfläche längliche Kerben (z.B. Riffelwalzen) dies ermöglicht einen besseren Einzug des Klärschlamms. Die Oberflächen sind im Falle von Protrusionen so beschaffen, dass diese in Ausnehmungen der gegenüberliegenden Oberfläche formschlüssig eingreifen. Es liegen bevorzugt insbesondere auch keine Zahnungen vor, die in eine Gegenzahnung eingreifen.

Gemäß einer bevorzugten Ausführungsform ist mindestens eine der Walzen eines Walzenpaares auch so beweglich ausgestaltet, so dass ihre Längsachse parallel zu einer Geraden oder Kreisbahn durch die Mittelpunkte der beiden Längsachsen des Walzenpaares verschoben werden kann. Es ist von Vorteil, wenn diese Verschiebung zu einer Vergrößerung des Abstandes der beiden Walzen des Walzenpaares führt, da auf diese Weise in dem Falle, dass große Partikel zwischen die Walzen geraten, diese durch Vergrößerung des Spaltes zwischen den Walzen hindurchtreten können. Dies verringert die Gefahr von Verstopfungen. Plastik, Steine, Hölzer, Metallgegenstände usw., die im Klärschlamm vorliegen, wirken sich bei einer solchen Ausführungsform nicht störend aus, da diese ebenso eingezogen, durchgeführt und unten ggf. durch Abstreifer abgeschabt werden.

Die Bewegung der Walzen relativ zueinander kann dermaßen realisiert sein, dass auch beide Walzen beweglich gehalten sind.

Bei einer Verwendung von Riffelwalzen haken sich größere Fremdstoffe im Walzenprofil ein, drücken die Walzen auseinander und fallen so hindurch.

Gemäß einer bevorzugten Ausführungsform umfasst die Vorrichtung mindestens eine Spannfeder, die so angeordnet ist, dass sie mindestens eine der beweglichen Walzen wieder in ihre Ausgangsposition absolut oder relativ zu der gegenüberliegenden Walze bewegen kann. Diese Spannfeder ist insbesondere entweder an einem stationären Gehäuseteil der Vorrichtung befestigt (absolute Rückstellung) oder an der Achse der anderen Walze (relative Rückstellung). Die Spannfeder erzeugt eine Vorspannung, die bei einem Auseinanderdrücken der Walzen ansteigt, sodass die bewegliche Walze nur bei einer bestimmten Belastung, die von eingezogenen Objekten stammt, kurz öffnet und anschließend durch die Spannfeder automatisch wieder schließt und so die Ausgangsform wieder herstellt. Dadurch läuft die Vorrichtung selbstständig ohne Ausfall weiter.

Gemäß einer alternativen Ausführungsform kann die Funktion der Spannfeder auch durch aktive Bewegungselemente übernommen werden, z.B. durch Elektromotoren, die mit einer Steuereinheit und einem die großen Partikel erkennenden Sensor gekoppelt sind, oder die nach einem Zeitintervall für eine Reinigung kurz öffnen. Ein solches Öffnung kann im Zuge einer Wartung natürlich auch manuell erfolgen.

Gemäß einer bevorzugten Ausführungsform umfasst die Vorrichtung einen Sensor, der eine laterale Bewegung (Auseinanderschieben) mindestens einer der Walzenpaare erkennt, und bevorzugt zusätzlich eine Einheit, die die Signale des Sensors verarbeitet und Bewegungen der Walze zur Dokumentation oder Statistik abspeichert oder ggf. einen Alarm ausgibt.

Es ist insbesondere bevorzugt, dass bei Erkennen eines Auseinanderschiebens der Walzen eine besondere Auffangeinheit zu dem Auslass bewegt wird, der den Klärschlamm zusammen mit den störenden Fragmenten auffängt und separat entsorgt.

Je nach Ausführung kann es auch vorteilhaft sein, dass die Information des Sensors bei einem Auseinanderschieben einen Stopp der Vorrichtung bewirkt, und so nachgeschaltete Prozesse gegen Fremdstoffe schützt.

Gemäß einer bevorzugten Ausführungsform umfasst die Vorrichtung zusätzlich mindestens eine Linearführung, z.B. eine Gleitschiene, in der ggf. bewegliche Walzen beim Öffnen geführt werden und beim Schließen wieder in die Ausgangslage gebracht werden. Diese Linearführung greift insbesondere an den Drehachsen der Walzen eines Walzenpaares an.

Gemäß einer bevorzugten Ausführungsform umfasst die Vorrichtung mindestens eine Achse mit jeweils einem Zahnrad an ihren Stirnseiten und mindestens zwei Zahnstangen, in denen diese Zahnräder laufen, wobei die Länge der Achse bevorzugt der Länge der Drehachse mindestens einer Walze entspricht. Bevorzugt ist jeder relativ zur Vorrichtung beweglichen Walze eine solche Zahnradachse zugeordnet und greift an der jeweiligen Drehachse an. Dies hat den Vorteil, dass durch die starre Zahnachse und den Eingriff in die Zahnstangen bei einer lateralen Bewegung der Walze die Drehachse dieser Walze exakt parallel zu ihrer Ausgangslage ausgerichtet bleibt und ein Verkanten verhindert wird.

Wird ein Fremdstoff außermittig eingezogen und die bewegliche Walze dadurch verschoben, so sorgt die Zahnstange dafür, dass die Walze stets parallel zu ihrer Ausgangslage bewegt wird.

Die Zahnstangen sorgen dafür, dass seitlich auftretende Kräfte die bewegliche Walze gleichmäßig auffedern lassen und kein seitlicher Versatz möglich ist.

Gemäß einer bevorzugten Ausführungsform umfasst die Vorrichtung eine Bewegungseinheit zur aktiven lateralen Bewegung mindestens einer der Walzen zur anderen (insbesondere in Richtung des Auseinanderschiebens). Bevorzugt ist dabei diese Bewegungseinheit so ausgestaltet, dass mindestens eine bewegliche Walze nach einer voreingestellten Zeit X bewegt wird, um Fremdstoffe, die z.B. kein automatisches Auseinanderschieben der Walzen bewirkt haben, zu entfernen.

Gemäß einer bevorzugten Ausführungsform umfasst die Vorrichtung einstellbare Anschläge, die ein weiteres Auseinanderbewegen der Walzen eines Walzenpaares verhindern. Auf diese Weise kann die maximale Partikelgröße bzw. die maximale Öffnung des Walzenspaltes eingestellt werden.

Gemäß einer bevorzugten Ausführungsform umfasst die Vorrichtung, insbesondere für jede der Oberflächen, mindestens ein Reinigungselement. Ein solches Reinigungselement kann ein Abstreifer sein, der dazu ausgestaltet ist, dass klebriger Klärschlamm, der in das Profil der Oberfläche gepresst wurde, abgelöst wird.

Der Abstreifer ist bevorzugt federbelastet ausgeführt und vorzugsweise im Verhältnis der Walze gegenüber dem Einlass angeordnet, was das Ablösen der abgeschabten Partikel verbessert, und die Standzeit erhöht. Die Abstreifer können auch mittels elektrischem Betätigungselement in eine Reinigungsposition gefahren werden, um sie sodann zu reinigen.

Ein solches Reinigungselement kann aber auch (insbesondere in Kombination mit einem Abstreifer) eine Reinigungsdüse sein.

Selbstverständlich ist die Vorrichtung im Grunde zur Behandlung von allen Substraten geeignet, für die eine Formgebung zu Strangpresslingen gewünscht ist.

Gemäß dem erfindungsgemäßen Verfahren wird vorentwässerter Klärschlamm der oben beschriebenen erfindungsgemäßen Vorrichtung zugeführt, indem der Klärschlamm zwischen die Walzen der Vereinzelungseinheit eingebracht wird. Durch das Verfahren der Vereinzelungseinheit in einer Hin-und-Her-Bewegung relativ zur Förderrichtung des Transportbandes der Bandtrocknungsanlage über dessen Bandbreite wird das Transportband unter bestmöglicher Nutzung seiner Tragfläche mit den Strangpresslingen aus der Vereinzelungseinheit beaufschlagt.

Zusätzliche Einzelheiten und weitere Vorteile der Erfindung werden nachfolgend anhand eines Ausführungsbeispieles, auf die die vorliegende Erfindung jedoch nicht beschränkend zu lesen ist, so wie in Verbindung mit den beigefügten Zeichnungsfiguren beschrieben.

In diesen zeigen
- Fig. 1 die erfindungsgemäße Vorrichtung in perspektivischer Ansicht;
- Fig. 2 die erfindungsgemäße Vorrichtung in Draufsicht;
- Fig. 3 eine Ansicht der Vorrichtung entlang der Förderrichtung des Transportbandes der Trocknungsanlage;
- Fig. 4 eine Seitenansicht der erfindungsgemäßen Vorrichtung;
- Fig. 5 ein bevorzugt strukturiertes Walzenpaar in Aufsicht;
- Fig. 6 schematisch eine Ausführungsform mit einer beweglichen Walze in Aufsicht.

Fig. 1 zeigt die erfindungsgemäße Vorrichtung 10 aus Einlasseinheit 12, Vereinzelungseinheit 14 und Bandtrocknungsanlage 16.

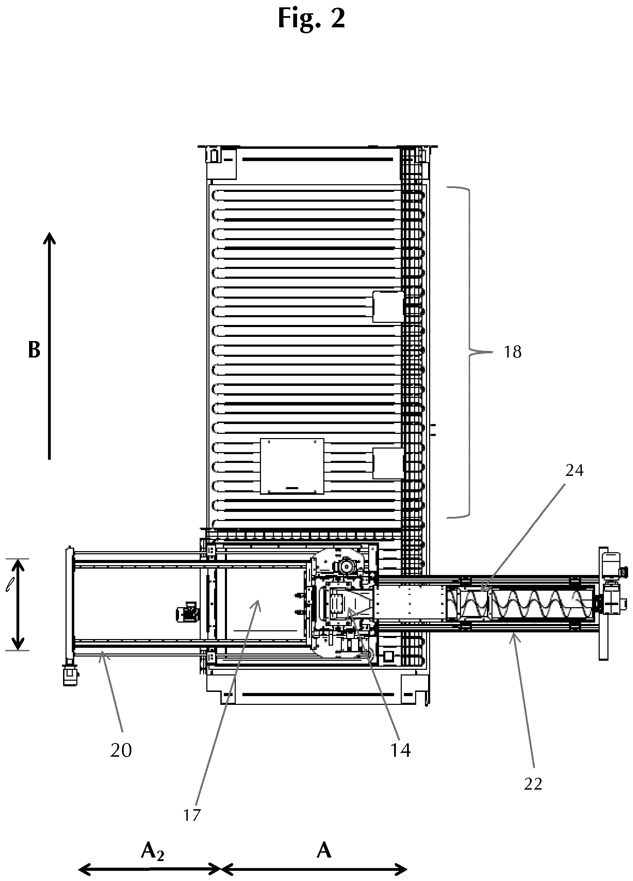

Im Detail umfasst die Einlasseinheit 12 eine Dosierschnecke 22 mit Einlauftrog 24. Die Dosierschnecke 22 ist mittels Rohranflanschung an die Vereinzelungseinheit 14 über einen Rohrbogen angeschlossen und wird mit dieser zusammen beim Verfahren quer zur Förderrichtung des Transportbandes (siehe Pfeil "B" aus Fig. 2) mitbewegt. Nicht mitbewegt wird hingegen der Einlauftrog 24, der als ein statischer Anschluss für eine externe Klärschlamm-Zuleitung dient. Auf die Öffnung des Einlauftroges 24 wird ein Auslassstutzen (nicht gezeigt) der externen Klärschlamm-Zuleitung aufgesetzt. Beim Verfahren der Dosierschnecke 22 - im gezeigten Ausführungsbeispiel auf Schienen 26 wird letztere unterhalb des Einlauftroges 24 derart bewegt, dass der zugeführte Klärschlamm beim Hindurchführen durch den Einlauftrog 24 über die Länge der Dosierschnecke 22 verteilt in selbige einlangt. Damit benötigt die Dosierschnecke auch eine Öffnungslänge, die dem Verfahrweg der Vereinzelungseinheit über die Breite des Transportbandes entspricht. Alternativ müsste bei kürzerer Länge der Dosierschnecke ein flexibler Zuführschlauch vom Einlauftrog zur Dosierschnecke zwischengeschaltet werden.

Die Dosierschnecke führt sodann der Vereinzelungseinheit das Ausgangsmaterial mit leichtem Schub kontinuierlich zu, d.h. Klärschlamm mit geeignetem Druck gleichförmig über die gesamte Walzenlänge. Die gezeigte Dosierschnecke ist eine ca. 1 m lange seelenlose Rohrschnecke und dosiert in Druck und Menge.

Fig. 2 zeigt dieselbe Vorrichtung in Draufsicht. Während das in der Trocknungszone 18 befindliche Transportband 17 in Richtung des Pfeils "B" verfährt, verfährt die Vereinzelungseinheit 14 mitsamt der Dosierschnecke 22 während des Normalbetriebes der Anlage und dem erfindungsgemäßen Verfahren in Richtung des Doppelpfeiles "A" hin und her. Diese hin-und-her-Bewegung der Vereinzelungseinheit erfolgt in der gezeigten Ausführungsform in einem Winkel von 90° zum Transportförderweg "B" des Transportbandes 17. Die Walzen des Walzenpaares der Vereinzelungseinheit 14 sind mit ihren Längsachsen über die Länge "I" (siehe Doppelpfeil in Fig. 4) gezeigt. Damit sind die Längsachsen der Walzen parallel zur Förderrichtung des Transportbandes 17 - siehe Förderrichtung "B" - angeordnet.

Ein Schlitten (im Detail nicht gezeigt) ist zum Verfahren der Vereinzelungseinheit 14 auf Schlitten-Schienen 20 vorgesehen. In der gezeigten Ausführungsform ist die Länge der Schlitten-Schienen 20 derart gewählt, dass der Schlitten über die Breite der Bandtrocknungsanlage hinaus (entsprechend dem Doppelpfeil "A₂") verfahren werden kann, so dass die Vereinzelungseinheit 14 zu Wartungs- oder Reinigungszwecken aus dem Bereich der Bandtrocknungsanlage gelangt, um einen Zugriff auf die Vereinzelungseinheit 14 zu erleichtern. Die Vereinzelungseinheit kann damit beispielsweise von unten mittels Wasserstrahl gereinigt werden. Auch ist sie dann von unten einsehbar, wobei insbesondere Verstopfungen in den Walzen leicht erkennbar sind.

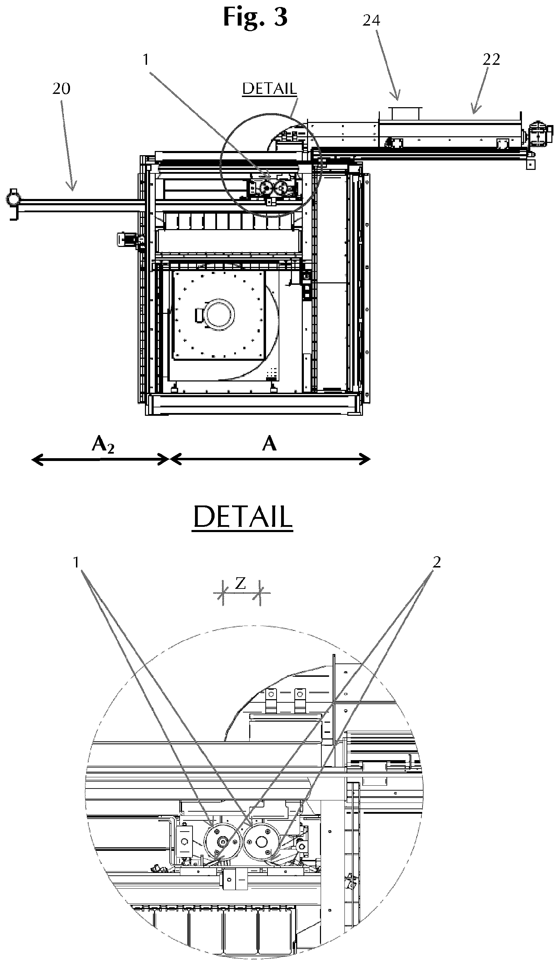

Fig. 3 zeigt die erfindungsgemäße Vorrichtung in Vorderansicht entlang der Förderrichtung des Transportbandes 17. Sowohl die Vereinzelungseinheit 14 als auch die Dosierschnecke 22 sind über eine Länge des Doppelpfeils "A" verfahrbar - und zwar senkrecht zur Förderrichtung des Transportbandes. Wie das bereits oben festgehalten wurde, ist der Einlauftrog 24 statisch und wird hier nicht mitbewegt. Wie das in Fig. 3 nun zu erkennen ist, ist der Einflauftrog 24 der Einlasseinheit 12 vorteilhaft so positioniert, dass er außerhalb des Bereiches der Bandtrocknungsanlage 16 liegt. Das hat den Vorteil, dass beim Überlauf des Einlauftroges 24 herabfallender Klärschlamm nicht auf die Bandtrocknungsanlage 16 fällt, sondern demgegenüber auf den Boden. Einer Verschmutzung der Bandtrocknungsanlage oder von Teilen hiervon wird dadurch vorgebeugt.

Über den Förderweg "A₂" kann die Vereinzelungseinheit 14 mitsamt der Dosierschnecke 22 soweit in den Bereich außerhalb der Bandtrocknungsanlage (siehe linksseitiger Bereich der Darstellung) verfahren werden, dass die Vereinzelungseinheit 14, d.h. deren Walzenpaar 1 von einer unter den Schlitten-Schienen befindlichen Wartungsperson von unten einsehbar ist. Dieser Verfahrweg "A₂" wird jedoch nur zu Wartungs- oder Reinigungszwecken genutzt. Während des normalen Trocknungs-Verfahrens verfährt die Vereinzelungseinheit 14 lediglich auf dem Verfahrweg des Doppelpfeils "A".

Das Detail von Fig. 3 zeigt das Walzenpaar aus Walzen 1. Darunter sind jeweilige Abstreifer 2 vorgesehen, die die Walzen sauber halten. Mit "Z" ist der Zulaufbereich vom Rohrbogen zwischen Einlasseinheit und Vereinzelungseinheit auf die Walzen gekennzeichnet.

In Fig. 4, die eine Seitenansicht der erfindungsgemäßen Vorrichtung zeigt, ist die Länge des Walzenpaares mit "I" gekennezeichnet. Die Achsen der Walzen liegen parallel zur Förderrichtung "B" des Transportbandes 17 der Bandtrocknungsanlage 16. Die Verfahrrichtung der Walzen während des translatorischen Verfahrens liegt in der Fig. 4 damit senkrecht zur Zeichnungsebene.

Fig. 5 zeigt schematisch ein bevorzugtes Walzenpaar in Aufsicht. Zur Durchführung von Klärschlamm ist deren Drehsinn gegenläufig, so dass sich gemäß dieser Aufsicht die innenliegenden Seiten der Walzen 1 nach unten bewegen. Die Oberflächen der Walzen sind strukturiert und greifen im Bereich der gegenseitigen Berührung komplementär ineinander.

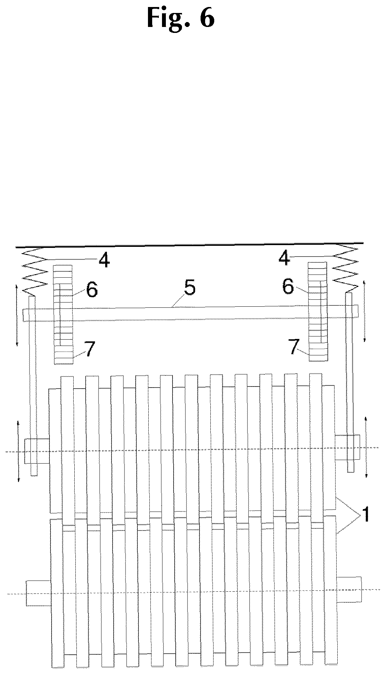

Bei der in Fig. 6 gezeigten Ausführungsform ist die eine Walze gegenüber der anderen Walze axial verschiebbar gelagert, so dass sich der Abstand der beiden Walzen zueinander variabel ändern kann. Das macht einen universellen Einsatz der Anlage für wechselnde Schlammmaterialien mit unterschiedlich darin enthaltenen Fremdkörpern möglich. Auch kommt es nicht zu einem Stillstand der Vereinzelungseinheit, insofern ein nicht zerfaserbarer Fremdkörper eingeschlossen ist. Dieser wird durch das Aufspreitzen der Walzen zueinander unverändert hindurchgeleitet und gelangt auf das Transportband. Zum Zurückdrücken der Walze dienen die beiden Spannfedern 4. Um ein Verkanten der Achse der Walze 1 zu verhindern, ist diese (selbstverständlich ohne ihre Drehung zu behindern) mit einer weiteren Zahnradachse 5 verbunden, auf der Zahnräder 6 stark zueinander angeordnet sind und in die Zahnstangen 7 greifen.

Ein Anschlag (nicht gezeigt) verhindert ein zu enges Schließen der Walzen, und verhindert damit einen zu engen Abstand der Walzen zueinander, da es von Vorteil ist, wenn sich zwischen den Walzen, bzw. den Strukturen stets ein kleiner Spalt befindet. Auch könne für die Walzen Reinigungsdüsen vorgesehen sein, mit denen die Walzen durch Beaufschlagung einer Flüssigkeit, insbesondere einer Reinigungsflüssigkeit, gereinigt werden.

Die Erfindung ist durch oben beschriebene Details nicht beschränkt. Vielmehr ist der Erfindungsgedanke durch die nachfolgend beigefügten Ansprüche definiert. Für den Fachmann ist es insbesondere erkennbar, dass die Erfindung auch in einer von der genauen parallelen Ausrichtung zwischen Walzen und Transportband (dessen Förderrichtung) abweichenden Anordnung gelichermaßen unter Nutzung obiger Vorteile realisierbar ist. Als Antrieb zum Verfahren der Vereinzelungseinheit kann ein Zahnstangenantrieb genauso wie ein Hydraulikantrieb oder eine Pneumatik fungieren. Auch kann erfindungsgemäß die Dosierschnecke mit einem verschwenkbaren oder verfahrbaren Zuförderer kombiniert sein. Die Dosierschnecke kann ferner waagrecht mit einem Rohr- oder Schachtbogen an die Vereinzelungseinheit angeschlossen sein, bzw. schräg oder senkrecht von oben mit einem Übergangsstück mit der Vereinzelungseinheit verbunden sein. Ist der Verfahrweg der Vereinzelungseinheit beispielsweise bogenförmig, so würde der Schlitten mit Schlittenschienen als Rahmen für die Fahrspur ebenfalls gebogen sein.

### Bezugszeichen liste:

- 1: Walze(n)
- 2: Abstreifer
- 3: strukturierte Oberfläche
- 4: Spannfeder
- 5: Zahnradachse
- 6: Zahnrad
- 7: Zahnstange

- 10: Vorrichtung
- 12: Einlasseinheit
- 14: Vereinzelungseinheit
- 16: Bandtrocknungsanlage
- 17: Transportband
- 18: Trocknungszone
- 20: Schlitten-Schienen der Vereinzelungseinheit
- 22: Dosierschnecke
- 24: Einlauftrog
- 26: Schienen der Dosierschnecke

## Patentansprüche

1. Vorrichtung zur Behandlung von Klärschlamm (2) umfassend eine
- Einlasseinheit (12) zum Zuführen des Klärschlamms (2) in
- eine Vereinzelungseinheit (14), die mindestens ein Walzenpaar aus zwei parallel angeordneten Walzen (1) mit gegenläufigem Drehsinn umfasst, so dass bei Drehung der Walzen Strangpresslinge aus dem zugeführten Klärschlamm gebildet werden,
- sowie eine Bandtrocknungsanlage (16), auf deren Transportband (17) die Strangpresslinge aufgetragen werden, um sie nachfolgend in einer zugehörigen tunnelartigen Trocknungszone (18) zu trocknen,
**dadurch gekennzeichnet, dass** die Walzen (1) der Vereinzelungseinheit mit ihren Längsachsen parallel zur Förderrichtung des Transportband (17) der Bandtrocknungsanlage (16) angeordnet sind und die Walzen (1) derart beweglich gelagert sind, dass sie über die Breite des Transportbandes (17) verfahrbar sind.

2. Vorrichtung nach Anspruch 1,
**dadurch gekennzeichnet, dass** die Verfahreinheit eine Steuerung zum automatisiert gesteuerten Hin-und-Her-Verfahren der Walzen aufweist.

3. Vorrichtung nach einem der vorangehenden Ansprüche 1 oder 2,
**dadurch gekennzeichnet, dass** die Verfahreinheit einen Schlitten auf Schlittenschienen (20) aufweist, mit denen die Vereinzelungseinheit (14) verfahren wird, wobei die Schlitten-Schienen über die Breite der Bandtrocknungsanlage (16) ragen, sodass die Vereinzelungseinheit (14) zu Wartungs- oder Reinigungszwecken auf ihrem Schlitten aus dem Bereich der Bandtrocknungsanlage bewegt werden kann, um einen Zugriff auf die Vereinzelungseinheit zu erleichtern.

4. Vorrichtung nach einem der vorangehenden Ansprüche,
**dadurch gekennzeichnet, dass** die Einlasseinheit eine Dosierschnecke (22) aufweist, mit der das Ausgangsprodukt auf die Walzen (1) der Vereinzelungseinheit (14) aufgebracht wird.

5. Vorrichtung nach Anspruch 4,
**dadurch gekennzeichnet, dass** die Dosierschnecke (22) mit der Vereinzelungseinheit (14) gemeinsam verfahrbar ist, und die Einlasseinheit (12) einen statischen Einlauftrog (24) aufweist, der als Anschluss einer externen Zuführeinheit fungiert, welcher Einlauftrog (24) den ankommenden Klärschlamm (2) in die unter ihm verfahrende Dosierschnecke (22) einbringt.

6. Vorrichtung nach Anspruch 4 oder 5,
**dadurch gekennzeichnet, dass** die Dosierschnecke (22) drehzahlgeregelt ist, um Verstopfungen entgegenzuwirken.

7. Vorrichtung nach einem der vorangehenden Ansprüche, **dadurch gekennzeichnet, dass** die Walzen (1) jeweils eine strukturierte Oberfläche (3) aufweisen, derart, dass diese Strukturen komplementär ineinandergreifen, sodass Klärschlamm (2) bei Drehung der Walzen (1) hindurchgepresst und aufgefasert wird.

8. Vorrichtung nach einem der vorangehenden Ansprüche, **dadurch gekennzeichnet, dass** mindestens eine der Walzen eines Walzenpaares derart beweglich ausgestaltet ist, dass ihre Längsachse parallel zu einer Geraden oder Kreisbahn durch die Mittelpunkte der beiden Längsachsen des Walzenpaares verschoben werden kann, wobei diese Verschiebung zu einer Vergrößerung des Abstandes der beiden Walzen des Walzenpaares führt, wobei die Vorrichtung bevorzugt zusätzlich mindestens eine Spannfeder (4) umfasst, die so angeordnet ist, dass sie mindestens eine der beweglichen Walzen wieder in ihre Ausgangsposition absolut oder relativ zu der gegenüberliegenden Walze bewegen kann und/oder die Vorrichtung aktive Bewegungselemente umfasst, die diese Funktion der Bewegung übernehmen.

9. Vorrichtung nach Anspruch 8, **dadurch gekennzeichnet, dass** die Vorrichtung einen Sensor umfasst, der ein Auseinanderschieben mindestens eine der Walzen erkennt, und bevorzugt zusätzlich eine Einheit, die die Signale des Sensors verarbeitet und Bewegungen der Walze zur Dokumentation oder Statistik abspeichert oder ggf. einen Alarm ausgibt, wobei insbesondere bevorzugt ist, dass bei Erkennen eines Auseinanderschiebens der Walzen eine Auffangeinheit zu dem Auslass bewegt wird, der den Klärschlamm zusammen mit den störenden Fragmenten auffängt und separat entsorgt und/oder dass die Information des Sensors bei einem Auseinanderschieben einen Stopp der Vorrichtung bewirkt, und so nachgeschaltete Prozesse gegen Fremdstoffe schützt.

10. Vorrichtung nach einem der vorangehenden Ansprüche 8 oder 9, **dadurch gekennzeichnet, dass** die Vorrichtung zusätzlich mindestens eine Linearführung umfasst, mittels derer bewegliche Walzen beim Öffnen und Schließen geführt werden, wobei die Vorrichtung insbesondere mindestens eine Achse (5) mit jeweils einem Zahnrad (6) im Bereich ihrer Stirnseiten und mindestens zwei Zahnstangen (7) umfasst, in denen diese Zahnräder (6) laufen, wobei die Länge der Achse (5) bevorzugt der Länge der Drehachse mindestens einer Walze (1) entspricht, wobei bevorzugt jeder relativ zur Vorrichtung beweglichen Walze eine solche Zahnradachse zugeordnet ist und an der jeweiligen Drehachse angreift.

11. Vorrichtung nach einem der vorangehenden Ansprüche, **dadurch gekennzeichnet, dass** sie mindestens ein Reinigungselement für mindestens eine der Oberflächen umfasst, wobei bevorzugte Reinigungselemente Reinigungsdüsen und/oder Abstreifer sind, die dazu ausgestaltet sind, dass Klärschlamm, der in das Profil der Oberfläche gepresst wurde, abgelöst wird.

12. Verfahren zur Behandlung von Klärschlamm mit einer Vorrichtung nach einem der vorangehenden Ansprüche, umfassend die Schritte:
- Zuführen von vorentwässertem Klärschlamm,
- Führen des Klärschlamms zwischen die Walzen der Vereinzelungseinheit,
- Verfahren der Vereinzelungseinheit in einer Hin-und-Herbewegung in einem Winkel relativ zur Förderrichtung des Transportbandes der Bandtrocknungsanlage über dessen Bandbreite.
